Europäisches Patentamt

**European Patent Office**

Office européen des brevets

(11) Numéro de publication: **0 099 809**
**B1**

(12) **FASCICULE DE BREVET EUROPEEN**

(45) Date de publication du fascicule du brevet:
**09.04.86**

(21) Numéro de dépôt: **83401408.6**

(22) Date de dépôt: **07.07.83**

(51) Int. Cl.⁴: **B 60 R 11/04,** F 16 M 13/02

(54) Dispositif de contrôle télécommandé de la position d'un support mobile.

(30) Priorité: **15.07.82 FR 8212346**

(43) Date de publication de la demande:
**01.02.84 Bulletin 84/5**

(45) Mention de la délivrance du brevet:
**09.04.86 Bulletin 86/15**

(84) Etats contractants désignés:
**AT BE CH DE GB IT LI LU NL SE**

(56) Documents cités:
**GB - A - 1 240 837**

(73) Titulaire: **CINACTION, 13 Passage des Tourelles,
F-75020 Paris (FR)**

(72) Inventeur: **Boucher, Gilles, 79 rue des Chantiers,
F-78000 Versailles (FR)**

(74) Mandataire: **Hirsch, Marc-Roger, 34 rue de Bassano,
F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1986

# Description

La présente invention s'applique à un dispositif de contrôle télécommandé de la position d'un plateau porté par un mobile tel qu'un plateau porte-caméra monté sur un véhicule automobile.

Il est connu dans de nombreuses techniques de télécommander l'orientation d'un organe viseur pour lui faire suivre les déplacements d'un mobile à viser et/ou dont on désire suivre les évolutions à l'aide de l'organe viseur qui selon les usages peut être une pièce d'artillerie dans des applications militaires et une caméra de cinéma ou de télévision dans certaines applications civiles. En faisant exécuter à un plateau support de l'organe viseur des rotations dans deux plans orthogonaux à l'aide d'une commande par moteurs électriques ou par vérins hydrauliques dans les applications nécessitant des efforts importants, on arrive aisément à faire balayer tout l'espace par l'organe viseur.

Lorsque l'organe viseur tel qu'une caméra, est monté sur un mobile rapide et soumis à un champ de vibrations intenses et variées, tel qu'une voiture automobile rapide, le suivi des évolutions d'un autre mobile tel qu'un sujet mobile à filmer devient plus aléatoire car, d'une part, l'organe viseur ne peut pas toujours être disposé rapidement dans l'alignement du mobile et est souvent gêné par des angles morts du véhicule, d'autre part, les vibrations et oscillations du véhicule porteur se transmettent au plateau porte-caméra quelquefois en s'amplifiant et rendent certaines images fluoes tout en faussant partiellement la visée et en bloquant parfois temporairement les vérins et/ou moteurs d'orientation du plateau support.

La présente invention vise notamment à permettre de réaliser par voie entièrement télécommandée, des prises de vue nettes à l'aide d'une ou plusieurs caméra(s) portée(s) par un véhicule rapide tel qu'une automobile, un motocycle, un véhicule à coussin d'air (aéro ou hydroglisseur) ou même un avion ou un hélicoptère tout en suivant fidèlement par visée les diverses évolutions du sujet et/ou de l'objet à filmer.

A cet effet, le dispositif de contrôle télécommandé de la position d'un plateau porté par un mobile tel qu'un plateau port-caméra monté sur un véhicule automobile, comporte selon l'invention:

— un premier étage d'orientation constitué de deux bras ou groupes de bras articulés en parallélogramme et susceptibles de se déplacer en rotation dans un plan général vertical sous l'action d'un vérin ou moteur de parallélogramme interposé entre un point fixe du parallélogramme tel qu'une articulation d'un bras et un autre bras (ou groupe de bras) opposé, les deux bras (ou groupes de bras) étant articulés, à l'une de leurs extrémités, à un support intermédiaire rigide maintenu en position sensiblement verticale au cours du débattement des bras en parallélogramme dans un plan vertical et à l'autre extrémité à un support de rotation susceptible de tourner dans un plan général horizontal autour d'un axe de rotation sensiblement vertical, pour entrainer les bras en rotation dans ce plan général horizontal sous l'action d'un vérin ou d'un moteur de rotation prenant appui sur le véhicule;

— un deuxième étage d'orientation à partir d'un premier plateau intermédiaire solidaire du support intermédiaire rigide et dans lequel le support proprement dit tel que le plateau porte caméra est susceptible d'être orienté en site et en azimut par des vérins ou des moteurs d'orientation;

— des moyens de télécommande individuelles du sens et de la vitesse de déplacement de chacun des verins ou moteurs des premier. et deuxième étages d'orientation permettant notamment de télécommander le suivi par la caméra d'un autre mobile en faisant évoluer l'azimut et le site du plateau porte-caméra à partir du premier plateau intermédiaire tout en assurant l'amortissement des vibrations susceptibles d'être transmises par le mobile au premier plateau intermédiaire et en couvrant, le cas échéant, un champ plus vaste par utilisation des déplacements additionnés des 2 étapes d'orientation.

Le premier plateau intermédiaire supporte un premier arbre vertical d'orientation sur lequel est posé mobile en rotation dans un plan sensiblement horizontal un deuxième plateau intermédiaire dont la position en rotation est contrôlée par un vérin ou un moteur d'orientation en azimut, ce deuxième plateau intermédiaire supportant un deuxième arbre d'orientation horizontal qui est rendu rigidement solidaire d'un plateau port-caméra, la rotation de ce deuxième arbre·dans un plan sensiblement horizontal étant contrôlée par un vérin ou un moteur d'orientation en site de la caméra.

Les deux vérins ou moteurs du premier étage d'orientation peuvent être asservis soit à une centrale de stabilisation en position qui délivre à ces vérins ou moteurs des ordres de correction aptes à maintenir le premier plateau intermédiaire dans une position sensiblement horizontale, soit à une centrale d'amortissement qui delivre à ces verins ou moteurs des ordres de correction aptes à amortir les oscillations imprimées à ce premier étage par le déplacement du mobile support.

Selon un autre mode de réalisation de l'inven-tion, le vérin de parallélogramme et/ou le vérin de rotation du premier étage d'orientation coopérant avec au moins un organe d'amortissement des déplacements des bras articulés sous l'action de ces vérins, cet organe d'amortissement pouvant être inclus dans le vérin correspondant.

En variante, l'organe d'amortissement coopérant avec au moins l'un des deux vérins du premier étage peut être un amortisseur tel qu'un amortisseur à relaxation ou un batteur qui laisse passer les basses fréquence d'oscillation du premier étage de l'ordre de 1 à 1,5 Hz et étouffe les fréquences élevées supérieures à des valeurs de l'ordre de 25 Hz pour un véhicule automobile courant.

Selon encore une autre forme de réalisation de l'invention, le premier étage d'orientation est doté de vérins donnant à cet étage une course augulaire variable et relativement lente mais permettant néanmoins de réagir aux sollicitations imprimées aux bras articulés par le chemin sur lequel se déplace le mobile porte-plateau tandis que le deuxième étage est doté de vérins ou de moteurs de rotation pour l'orientation en site et en azimut et dont la course angulaire variable est plus rapide pour permettre de suivre avec fidélité la course d'un autre mobile sur lequel la caméra est pointée.

Selon un mode de réalisatio permettant de limiter l'ensemble des vibrations parasites auxquelles est soumis le plateau porte-caméra, le premier étage d'orientation est fixé sur le mobile porteur par l'intermédiaire d'une suspension dont la raideur est choisie de manière à bien filtrer les fréquences moyennes de vibration de la caisse du véhicule porteur, de l'ordre de 1,5 à 25 Hz pour un véhicule automobile courant.

Selon un autre mode de réalisation qui vise à éliminer le plus complètement possbile les vibrations les plus gênantes pour une caméra de prise de vue, le premier étage d'orientation est fixé sur le mobile porteur dans une zone où les vibrations à fréquence élevée, notamment les vibrations de fréquence comprise entre 25 et 40 Hz particulièrement gênantes pour les prises de vue d'une caméra sont relativement affaiblies et par l'intermédiaire d'une suspension apte à filtrer les fréquences de vibrations comprises entre 25 et 40 Hz.

Le premier plateau intermédiaire est fixé de préférence de façon réglable sur le support intermédiaire et à un niveau tel que le centre de gravité des équipements qu'il porte soit placé sensiblement à mi-distance des deux articulations des bras sur ce support intermédiaire.

Un mode de réalisation de la presente invention est dicrit, a'apris en détail, en regard du dessin annexé où:

— la figure 1 représente une vue de dessus d'un dispositif de contrôle télécommandé pour un plateau porte-caméra;
— la figure 1a représente en perspective un véhicule automobile équipé du dispositif de contrôle de plateau porte-caméra représenté sur la figure 1;
— la figure 2 est une vue de côté du dispositif de la figure 1;
— la figure 3 est une vue de dessus, avec arrachements partiels, à plus grande échelle du plateau porte-caméra équipé d'une caméra et de ses moteurs d'orientation;
— la figure 4 est une vue en coupe transversale du plateau équipé représenté sur la figure 3;

— la figure 5 est une vue en coupe longitudinale du plateau équipé représenté sur la figure 3.

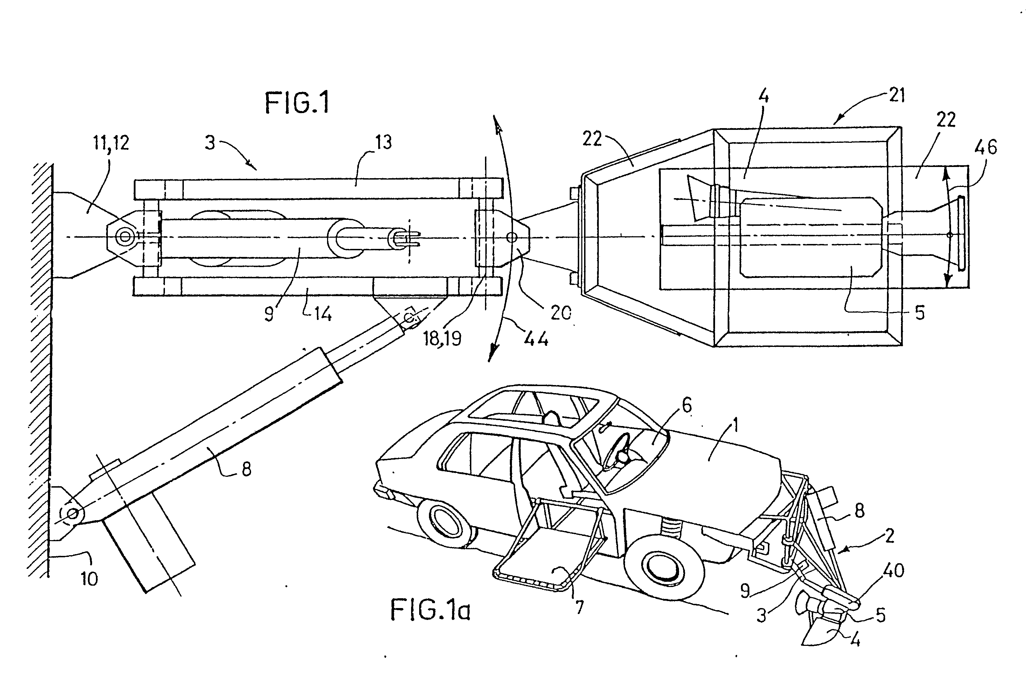

Si l'on se reporte à la figure 1b, on voit une voiture automobile 1 qui est équipée à l'avant d'un bras porte-caméra 2 constitué d'un premier étage d'orientation à réalisé en éléments tubulaires et qui soutient un plateau ou une embase porte-caméra 4 sur lequel est montée une caméra 5 de cinéma ou de télévision dont l'orientation peut être télécommandée depuis le siège du véhicule 1, par exemple à l'aide d'un palonnier de commande à deux sens de commande monté au tableau de bord 6 de l'automobile 1 qui possède par 'exemple une plate-forme 7 sur laquelle peut prendre place un opérateur ou un acteur à filmer par la caméra 5. Selon l'invention, le premier étage d'orientation 3 peut se déplacer en rotation dans un plan horizontal sous le contrôle d'un vérin de rotation 8 et dans un plan vertical sous le contrôle d'un vérin de parallélogramme 9 qui agit sur l'un des deux bras parallèles constituant le premier étage d'orientation 3.

Si l'on se reporte à la figure 1 qui représente à plus grande échelle le bras porte-caméra 2 monté sur le véhicule 1 de la figure 1a, on voit que ce bras est fixé au châssis 10 du véhicule à l'aide d'attaches 11 et 12 qui peuvent constituer une suspension filtrant, par exemple les fréquences moyennes du véhicule (entre 1 et 25 Hz par exemple), ou les fréquences de vibrations plus élevées (entre 25 et 40—50 Hz par example). Une telle suspension peut être réalisée au moyen de simples manchons ou "silent-blocs" en élastomère de dureté et de coefficient d'amortissement interne appropriés. Les repères appliqués aux éléments de la figure 1a sont reportés aux mêmes éléments figurant sur les figures 1 à 5.

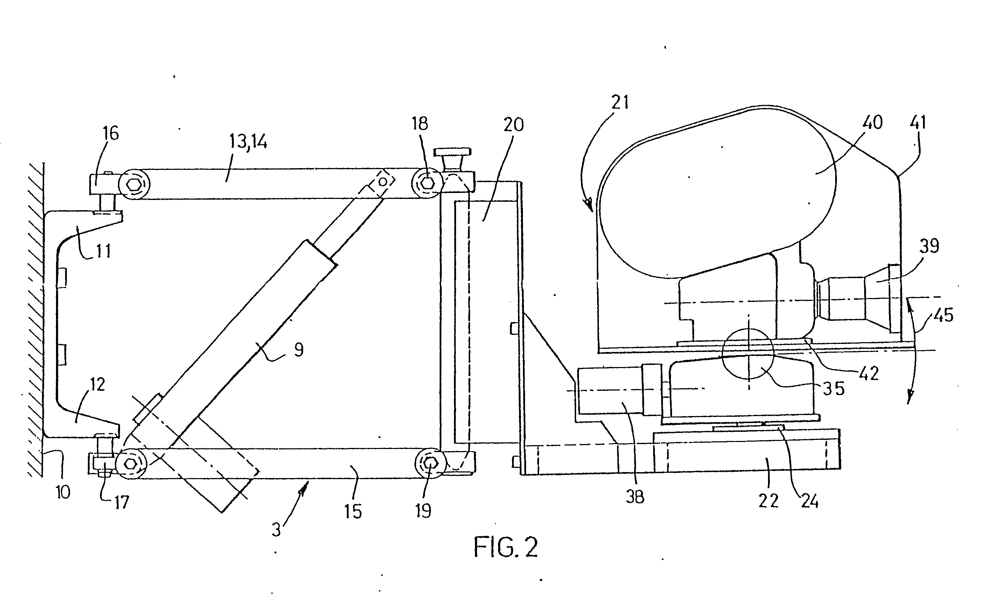

Le premier étage d'orientation 3 que l'on voit mieux sur la vue de côté de la figure 2, est constitué de deux groupes de bras supérieurs 13 et 14 et d'un groupe de bras inférieurs 15 dont seul un des bras apparaît à la figure 2. Ces deux groupes de bras sont articulés en parallélogrammes, à une extrémité, à un support de rotation en deux parties supérieure 16 et inférieure 17 et à l'autre extrémité par des articulations 18 et 19 à un support intermédiaire rigide 20 sur lequel est monté par tout moyen adéquat tel que des vis et de façon réglable, un premier plateau intermédiaire 22 relativement rigide et sur lequel on peut venir appliquer une embase 4 du plateau porte-caméra, par exemple au moyen de vis non représentées, et sur laquelle est disposé un deuxième étage d'orientation 21.

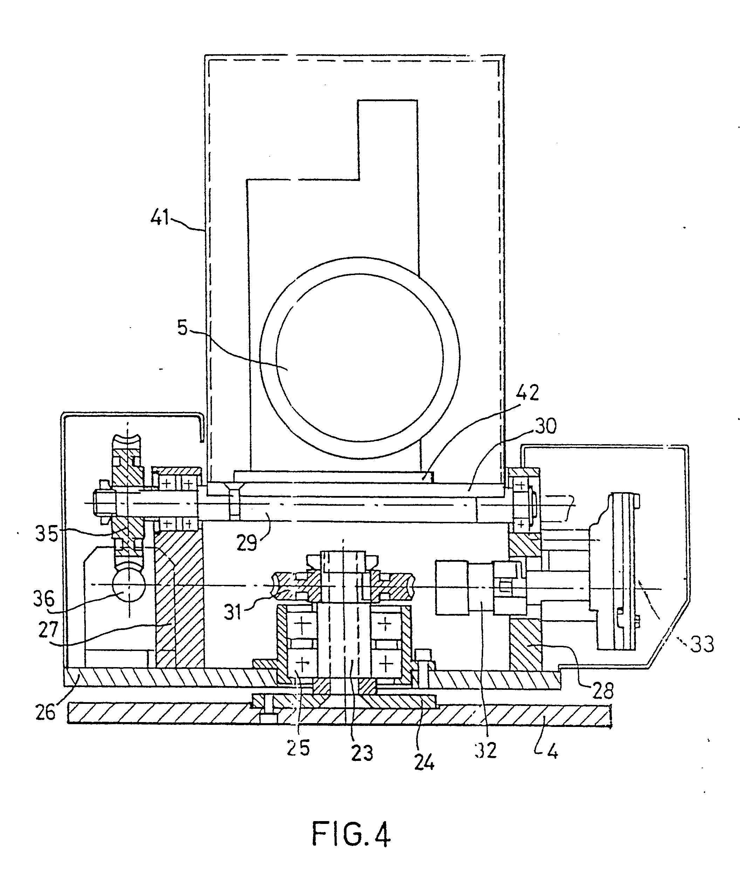

Si l'on se reporte maintenant à la figure 4, on voit comment la caméra 5 est reliée à l'embase 4 par l'intermédiaire d'un premier arbre d'orientation 23 fixé verticalement par une plaque 24 sur l'embase 4, et autour duquel est articulé, par des paliers à billes 25, un deuxième plateau intermédiaire 26 qui porte des montants 27 et 28. Un deuxième arbre d'orientation 28 est monté horizontalement par l'intermédiaire de paliers à billes dans les montants 27 et 28 et porte à l'aide de vis un plateau porte-caméra proprement dit 30 sur lequel est fixé la caméra 5.

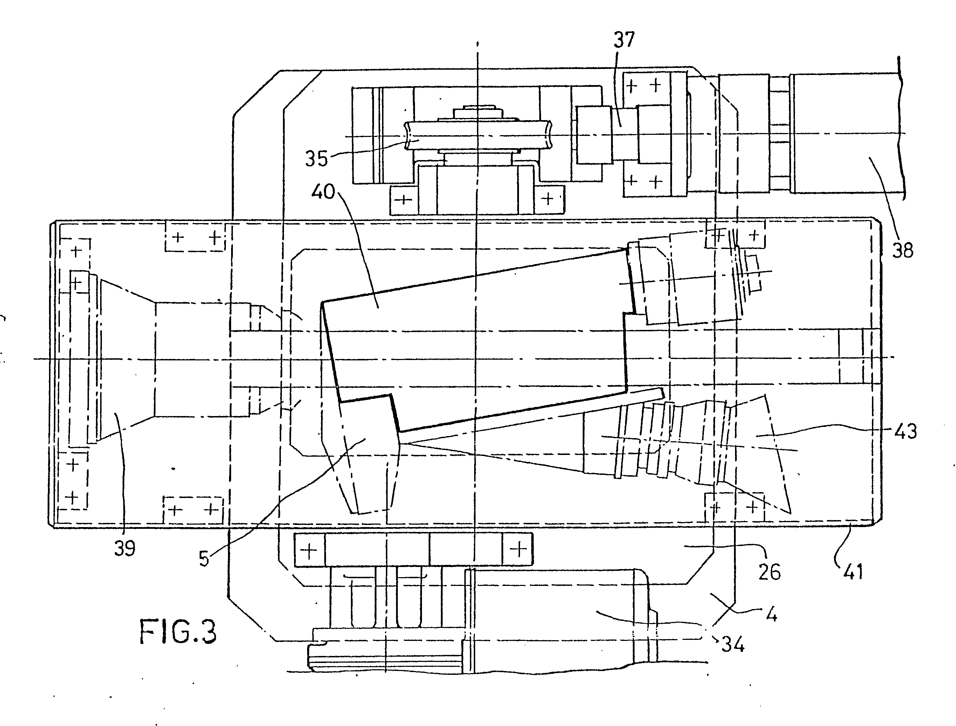

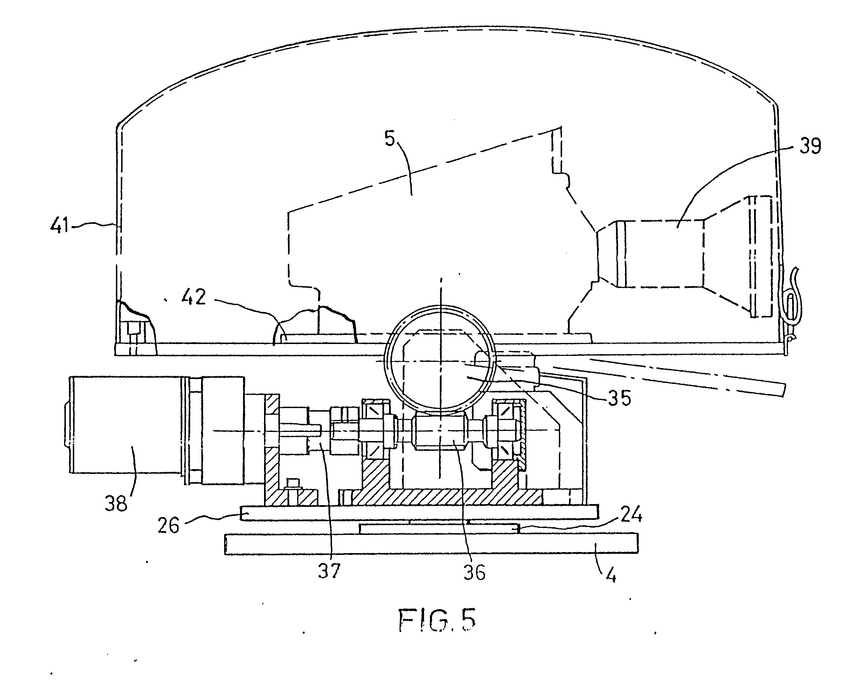

Pour permettre le réglage en rotation du deuxième plateau intermédiaire 26, une couronne dentée 31 est clavetée sur l'arbre 23 solidaire de l'embase 4 et vient engrener avec une vis sans fin non représentée et entraînée en rotation par un arbre de transmission 32 représenté en coupe décalée sur la figure 4 et relié, par l'intermédiaire d'un boîtier de transmission à engrenages 33, à un moteur électrique d'entrainement 34 (voir la figure 3). L'entraînement en rotation du deuxième arbre d'orientation 29, est assuré de même par l'intermédiaire d'une couronne dentée 35 clavetée sur cet arbre 29 et qui engrène avec une vis sans fin 36 reliée par une transmission 37 à un moteur électrique 38 (voir la figure 5). La caméra 5 avec son objectif 39 et ses rouleaux de film 40 est protégée par une enveloppe 41 amovible à l'aide de crochets et peut être déposée aisément du plateau 30 par dévissage d'un socle de caméra 42.

La caméra 5 et les moteurs électriques d'orientation 34 et 38 sont reliés par des câbles non représentés à un poste de commande aménagé dans le véhicule porteur 1 et auquel sont reliés également le vérin de rotation 8 et le vérin de parallélogramme 9 qui peuvent être des vérins hydrauliques mais qui pour le contrôle d'une caméra montée sur une automobile sont généralement des vérins électriques dotés éventuellement d'un amortissement interne à friction. Des amortisseurs indépendants, par exemple hydrauliques, peuvent être montés en parallèle aux vérins 8 et 9 en des points appropriés de l'étage d'orientation 3.

Le fonctionnement du dispositif selon l'invention va maintenant être explicité. Le véhicule automobile 1 se propose par exemple de suivre le parcours d'un motocycliste sur une route à parcours tourmenté en se plaçant sur la gauche de ce motocycliste après rabattement de la plateforme 7 au niveau de la portière droite de la voiture. La caméra 5 doit, au cours du parcours, venir se placer continuellement en face du motocycliste en le cadrant au mieux. La télécommande de la caméra 5 est confiée à un opérateur occupant la place du passager avant de la voiture 1. Au cours du parcours, le bras porte-caméra 2 est soumis à des vibrations intenses dont celles situées dans la plage de fréquence 25—40 Hz sont les plus gênantes pour la qualité de l'image. L'opérateur du bras positionne le premier étage d'orientation 3 en vitesse lente par corrections successives et les attaches 11 et 12 ainsi que les amortisseurs externes ou montés dans les vérins 8 et 9 amortissent et étouffent les vibrations gênantes pour la caméra 5.

A l'aide d'un palonnier de commande monté par exemple au tableau de bord 6 de la voiture 1, l'opérateur peut contrôler simultanément le sens et la vitesse de rotation des moteurs électriques 34 et 38 pour positionner continuellement l'objectif 39 de la caméra 5 sur le champ à filmer qui lui apparaît en vision optique directe à l'aide d'un renvoi optique branché sur la viseur 43 de la caméra 5 ou plus généralement à l'aide d'un écran de contrôle vidéo monté dans la voiture 1 dans le cas où l'on utilise une caméra de télévision.

L'opérateur peut ainsi suivre depuis l'intérieur d'une voiture automobile le déroulement d'un spectacle mobile qui s'exécute à grande vitesse tel qu'une course cycliste ou motorisée en télécommandant l'ensemble des déplacements de la caméra 5. Le premier étage d'orientation 3 peut être doté d'une course angulaire de débattement 44 (voir la figure 1) relativement limitée dans les deux axes de rotation et les courses 45 et 46 de la caméra 5 dans des plans orthogonaux par rapport à l'embase 4 sont également limitées mais l'addition de ces courses sur les deux étages d'orientation 3 et 21 permet de balayer un champ très large. Le premier étage 3 est généralement préorienté avant le début d'une opération de prise de vue à grande vitesse et remplit au cours de cette opération essentiellement le rôle d'un amortisseur des vibrations génantes qui était rempli auparavant par le porteur de la caméra embarqué sur le véhicule 1. Pour une plus grande efficacité dans le filtrage des vibrations, les fréquences propres du premier étage 3 et du deuxième étage 21 sont avantageusement découplées et des amortisseurs statiques tels que des silent-blocs peuvent être interposés entre le support intermédiaire rigide 20 et le premier plateau intermédiaire 22.

Le plateau porte-caméra 30 peut recevoir d'autres équipements suiveurs tels que des viseurs, des armes, des têtes de peinturage, de sablage, des broches de machines-outils ou de meules, que l'on désire positionner rapidement et avec un bon filtrage des vibrations. La commande des vérins d'orientation 8 et 9 et des moteurs électriques 34 et 38 peut de même être réalisée par un centre de commande numérique (CNC) ou un ordinateur de positionnement dynamique.

Selon un mode de réalisation de l'invention bien adapté à la fixation du support en un endroit dégagé, le support de rotation est susceptible d'être entraîné en rotation par le moteur de rotation sur un angle important tel qu'un angle supérieur à 360° tout en étant limité dans sa course en rotation par des butées interdisant la destruction du (ou des) câbles assurant la liaison entre le véhicule et, d'une part, la caméra, d'autre part, les vérins ou moteurs des premier et deuxième étages d'orientation, tandis que les angles de débattement du plateau porte-caméra sont limités à des valeurs plus faibles de l'ordre de 60° de manière à permettre depuis un point fixe du mobile dégagé en service tel que le toit d'une automobile ou le ventre d'un hélicoptère, de balayer rapidement tous les azimuts par rotation du premier étage d'orientation tout en réduisant l'encombrement du support en position de repos du véhicule.

Selon une autre variante de réalisation permettant à la caméra 5 de se déplacer en rotation sur un angle aussi important que 360° ou plus par rapport au point d'attache sur le véhicule, les bras supérieurs et inférieurs 13, 14, 15 du premier étage d'orientation sont articulés sur un support rotatif jouant le rôle du support 16 mais apte à tourner sous l'action et le contrôle d'un moteur de rotation constitué par exemple d'un moteur électrique et de trains d'engrenages intermédiaires. Un repère de télécontrôle tel qu'un potentiomètre de recopie permet de repérer l'orientation du premier étage en azimut par rapport au véhicule. La vision du champ de lu caméra par l'intermédiaire d'un viseur ou un écran de télécontrôle vidéo autorise la télécommande fidèle des déplacements combinés des deux étages d'orientation pour obliger la caméra à rester pointée sur un sujet mobile à filmer.

La caméra ou l'appareil fixé sur le support et nécessitant un télécontrôle depuis le véhicule (appareil qui peut être une arme, une tête d'usinage ou de traitement) peut ainsi être attaché au mobile ou au véhicule en un point assurant, soit d'une part, la meilleure tranquillisation et/ou immunité à l'égard des vibrations gênantes susceptibles d'être induites par le véhicule (ce point pouvant être le toit d'un véhicule automobile), soit d'autre part, la meilleure visibilité en service.

Dans le cas d'un hélicoptère, le ventre de l'appareil qui autorise la meilleure vision vers le sol au cours du vol constitue un point d'attache avantageux pour le support dont le premier étage d'orientation, en tournant sur un angle aussi important que 360°, permet d'atteindre tous les azimuts sans changer la direction de vol. Le premier étage d'orientation peut également autoriser le repli de la caméra sur le côté de l'hélicoptère avant qu'il ne se pose sur le sol pour ne laisser que peu d'espace accessible entre le sol et la carlinque.

On doit bien entendu comprendre que la rotation du premier étage peut s'effectuer sur un angle supérieur à un tour complet, mais doit de toute façon être limitée par des butées pour éviter de détruire les câbles souples de transmission et de télécommande interposés entre le véhicule et la caméra et les étages d'orientation. Les angles de débattement du plateau porte-caméra 30 par rapport au premier plateau intermédiaire 22 peuvent par contre être limités à des valeurs beaucoup plus faibles que l'angle de rotation du premier étage d'orientation et de l'ordre par exemple de 60°.

## Revendications

1. Dispositif de contrôle télécommandé de la position d'un support porté par un mobile tel qu'un plateau porte-caméra monté sur un véhicule automobile caractérisé en ce qu'il comporte:

— un premier étage d'orientation (3) constitué de deux bras ou groupes de bras (13, 14, 15) articulés en parallélogramme et susceptibles de se déplacer en rotation dans un plan général vertical sous l'action d'un vérin ou moteur de parallélogramme (9) interposé entre un point fixe du parallélogramme tel qu'une articulation (17) d'un bras et un autre bras (ou groupe de bras) opposé (13, 14), les deux bras (ou groupes de bras) (13, 14, 15) étant articulés, à l'une de leurs extrémités, à un support intermédiaire rigide (20) maintenu en position sensiblement verticale au cours du débattement des bras en parallélogramme dans un plan vertical et, à l'autre extrémité, à un support de rotation (16, 17) susceptible de tourner dans un plan général horizontal autour d'un axe de rotation sensiblement vertical, pour entraîner les bras en rotation dans ce plan général horizontal sous l'action d'un vérin ou d'un moteur de rotation (8) prenant appui sur levéhicule;

— un deuxième étage d'orientation (21) à partir d'un premier plateau intermédiaire (22) solidaire du support intermédiaire rigide (20) et dans lequel le support proprement dit tel que le plateau porte-caméra (30) est susceptible d'être orienté en site et en azimut par des vérins ou moteurs (34, 38) d'orientation;

— des moyens de télécommande individuelle du sens et de la vitesse de déplacement de chacun des vérins (8, 9, 34, 38) des premiers (3) et deuxième (21) étages d'orientation permettant notamment de télécommander le suivi par la caméra (5) d'un autre mobile en faisant évoluer l'azimut et le site du plateau (30) porte-caméra à partir du premier plateau intermédiaire (22), tout en assurant un bon amortissement des vibrations susceptibles d'être transmises par le mobile au premier plateau intermédiaire (22) et en couvrant, le cas échéant, un champ plus vaste, en utilisant les déplacements additionnés des deux étages d'orientation.

2. Dispositif selon la revendication 1, caractérisé en ce que le premier plateau intermédiaire (22) solidaire du support intermédiaire (20), supporte un premier arbre vertical d'orientation (23) sur lequel est posé, mobile en rotation dans un plan sensiblement horizontal, un deuxième plateau intermédiaire (26) dont la position en rotation est contrôlée par un vérin ou un moteur d'orientation (38) en azimut, ce deuxième plateau intermédiaire (26) supportant un deuxième arbre d'orientation (29) horizontal qui est rendu rigidement solidaire du plateau porte-caméra (30), la rotation de ce deuxième abre (29) dans un plan sensiblement horizontal étant contrôlée par un vérin ou un moteur (34) d'orientation en site de la caméra (5).

3. Dispositif selon la revendication 1 ou 2, caractérisé en ce que les deux vérins ou moteurs (8, 9) du premier étage (3) d'orientation sont asservis chacun à une centrale de stabilisation en position qui délivre à ces vérins des ordres de correction aptes à maintenir le premier plateau intermédiaire (22) dans une position sensiblement horizontale.

4. Dispositif selon l'une des revendication 1 à 3, caractérisé en ce que les deux vérins ou moteurs (8, 9) du premier etage (3) d'orientation sont asservis chacun à une centrale d'amortissement qui délivre à ces vérins des ordres de correction aptes à amortir les oscillations imprimées à ce premier étage (3) par le déplacement du mobile support (1).

5. Dispositif selon l'une des revendications 1 à 4, caractérisé en ce que le vérin de parallélogramme (9) et/ou le vérin de rotation (8) du premier étage d'orientation (3) coopèrent avec au moins un organe d'amortissement des déplacements des bras articulés (13, 14, 15) sous l'action de ces vérins.

6. Dispositif selon la revendication 5, caractérisé en ce que l'organe d'amortissement est inclus dans le vérin de parallélogramme (9) et/ou le vérin de rotation (8).

7. Dispositif selon l'une des revendications 5 ou 6, caractérisé en ce que l'organe d'amortissement coopérant avec au moins l'un des deux vérins (8, 9) du premier étage (3) est un amortisseur tel qu'un amortisseur à relaxation ou un batteur qui laisse passer les basses fréquences d'oscillation du premier étage (3) de l'ordre de 1 à 1,5 Hz et étouffe les fréquences élevées supérieures à des valeurs de l'ordre de 25 Hz pour un véhicule automobile courant.

8. Dispositif selon l'une des revendications 1 à 7 caractérisé en ce que le premier étage d'orientation (3) est doté de vérins (8, 9) donnant à cet étage une course angulaire variable et relativement lente mais permettant néanmoins de réagir aux sollicitations imprimées aux bras articules (13, 14, 15) par le chemin sur lequel se déplace le mobile (1) porte-plateau tandis que le deuxième étage (21) est doté de vérins ou de moteurs de rotation (34, 38) pour l'orientation en site et en azimut et dont la course angulaire variable est plus rapide pour permettre de suivre avec fidélité la course d'un autre mobile sur lequel la caméra (5) est pointée.

9. Dispositif selon l'une des revendications 1 à 8, caractérisé en ce que le premier étage d'orientation (3) est fixé sur le mobile porteur (1) par l'intermédiaire d'une suspension dont la raideur est choisie de manière à bien filtrer les fréquences moyennes de vibration de la caisse du véhicule porteur (1) de l'ordre de 1,5 à 25 Hz pour un véhicule automobile courant.

10. Dispositif selon l'une des revendications 1 à 8, caractérisé en ce que le premier étage d'orientation (3) est fixé sur le mobile porteur (1) dans une zone où les vibrations à fréquence élevée, notamment les vibrations de fréquence comprise entre 25 et 40 Hz particulièrement génantes pour les prises de vue d'une caméra (5) sont relativement affaibles et par l'intermédiaire d'une suspension apte à filtrer les fréquences de vibration intermédiaires comprises entre 25 et 40 Hz.

11. Dispositif selon l'une des revendications 1 à 10, caractérisé en ce que le premier plateau intermédiaire (22) est fixé de façon réglable sur le support intermédiaire (20) et à un niveau tel que le centre de gravité des équipements qu'il porte soit placé sensiblement à mi-distance des deux articulations (18, 19) des bras (13, 14, 15) sur le support intermédiaire (22).

12. Dispositif selon l'une des revendications 1 à 11, caractérisé en ce que le support de rotation (16, 17) est susceptible d'être entraîné en rotation par le moteur de rotation (8) sur un angle important tel qu'un angle supérieur à 360°, tout en étant limité dans sa course en rotation par des butées interdissant la destruction du ou des câble(s) assurant la liaison entre le véhicule et d'une part, la caméra, d'autre part les vérins ou moteurs des premiers et derniers étages d'orientation, tandis que les angles de débattement du plateau porte-caméra (30) par rapport au premier plateau intermédiaire (22) sont limités à des valeurs plus faibles de l'ordre de 60° de manière à permettre, depuis un point fixe du mobile dégagé en service tel que le toit d'une automobile ou le ventre d'un hélicoptère, de balayer rapidement tous les azimuts par rotation du premier étage d'orientation (3) tout en réduisant l'encombrement du support en position de repos du véhicule.

**Patentansprüche**

1. Fernsteuervorrichtung zum Positionieren eines von einem beweglichen Körper, wie eine auf einem Kraftfahrzeug angeordnete Kameratragplatte, getragenen Trägers, dadurch gekennzeichnet, dass sie umfasst:

— eine erste Ausrichtstufe (3), die zwei Arme oder Armgruppen (13, 14, 15) aufweist, welche ein gelenkiges Parallelogramm bilden und in einer wesentlich senkrechten Ebene unter der Einwirkung eines Parallelogramm=Drucktopfs bzw. =Motors (9) drehbar sind, der zwischen einem ortsfesten Punkt, wie Gelenk (17) eines Armes und einem entgegengesetzten anderen Arm (bzw. Armgruppe) (13, 14) eingeschaltet ist, wobei die beiden Arme (bzw. Armgruppen) (13, 14, 15) an einem ihrer Enden an einen während der in einer vertikalen Ebene erfolgenden Parallelogramm-Schwenkbewegung der Arme in wesentlich vertikaler Lage gehaltenen, steifen Zwischenträger (20) und am anderen Ende an einen um eine wesentlich senkrechte Drehachse in einer wesentlich horizontalen Ebene drehbaren Drehträger (16, 17) angelenkt, um die Arme unter der Einwirkung eines sich am Fahrzeug abstützenden Drehdrucktopfs bzw. =Motors (8) in dieser wesentlich horizontalen Ebene zu drehen;

— eine zweite Stufe (21) zur Ausrichtung von einer ersten Zwischenplatte (22) aus, die mit dem steifen Zwischenträger (20) fest verbunden ist, wobei der eigentliche Träger, wie Kameratragplatte (30) hinsichtlich der Lage und des Azimuts durch Ausricht=Drucktöpfe bzw. =Motoren (34, 38) ausrichtbar ist;

— Mittel zur individuellen Fernsteuerung der Bewegungsrichtung und =geschwindigkeit jedes Drucktopfes (8, 9, 34, 38) der ersten (3) und der zweiten (21) Ausrichtstufe, die es insbesondere ermöglichen, die Kamera (5) derart fernzusteuern, dass sie einem anderen beweglichen Körper folgt, durch Regulierung der Winkellagen= und Azimutalausrichtung der Kameratragplatte (30), ausgehend von der ersten Zwischenplatte (22), und dabei die Schwingungen dämpfen, die vom ersten beweglichen Körper auf die erste Zwischenplatte (22) übertragen werden könnten, und ferner gegebenenfalls ein weiteres Feld decken, indem sie die summierten Bewegungen der beiden Ausrichtstufen ausnutzt.

2. Vorrichtung nach Anspruch 1, dadurch gekennzeichnet, dass die erste mit dem Zwischenträger (20) fest verbundene Zwischenplatte (22) eine erste vertikale Ausrichtwelle (23) trägt, auf welcher eine in einer wesentlich horizontalen Ebene drehbare zweite Zwischenplatte (26) angeordnet ist, deren Azimutaldrehlage durch einen Ausricht-Drucktopf bzw. =Motor (38) reguliert wird und die eine mit der Kameratragplatte (30) fest verbundene zweite horizontale Ausrichtwelle (29) trägt, deren Drehung in einer wesentlich horizontalen Ebene durch einen Kamera-Winkellagen-Ausricht=Drucktopf bzw. =Motor (34) gesteuert wird.

3. Vorrichtung nach Anspruch 1 oder 2, dadurch gekennzeichnet, dass die beiden Drucktöpfe bzw. Motoren (8, 9) der ersten Ausrichtstufe (3) von je einer Lagenstabilierungs-Zentrale gesteuert werden, die an diese Drucktöpfe Korrekturbefehle abgibt, welche dazu geeignet sind, die erste Zwischenplatte (22) in wesentlich waagerechter Lage zu halten.

4. Vorrichtung nach einem der Ansprüche 1 bis 3, dadurch gekennzeichnet, dass die beiden Drucktöpfe bzw. Motoren (8, 9) der ersten Ausrichtstufe (3) durch je eine Dämpfungszentrale gesteuert werden, die an diese Drucktöpfe Korrekturbefehle abgibt, welche dazu geeignet sind, die durch die Bewegung des beweglichen Tragorgans (1) erzeugten Schwingungen dieser ersten Stufe (3) zu dämpfen.

5. Vorrichtung nach einem der Ansprüche 1 bis 4, dadurch gekennzeichnet, dass der Parallelogramm-Drucktopf (9) und/oder der Dreh-Drucktopf (8) der ersten Ausrichtstufe (3) mit wenigstens einem die durch die Wirkung dieser Drucktöpfe hervorgerufenen Bewegungen der Gelenkarme (13, 14, 15) dämpfenden Organ zusammenwirken.

6. Vorrichtung nach Anspruch 5, dadurch gekennzeichnet, dass das Dämpfungsorgan in den Parallelogramm-Drucktopf (9) und/oder in den Dreh-Drucktopf (8) eingebaut ist.

7. Vorrichtung nach einem der Ansprüche 5 oder 6, dadurch gekennzeichnet, dass das mit wenigstens einem der beiden Drucktöpfe (8, 9) der ersten Stufe (3) zusammenwirkende Dämpfungsorgan ein Dämpfer, wie Entspannungs- oder Schwingungsdämpfer ist, der bei einem normalen Kraftfahrzeug die niedrigen Schwingungsfrequenzen von etwa 1 bis 1,5 Hz der ersten Stufe (3) durchlässt und die hohen Frequenzen von mehr als etwa 25 Hz unterdrückt.

8. Vorrichtung nach einem der Ansprüche 1 bis 7, dadurch gekennzeichnet, dass die erste Ausrichtstufe (3) mit Drucktöpfen (8, 9) versehen ist, die dieser Stufe einen veränderlichen und verhältnismässig langsamen Hub erteilen, der es jedoch ermöglicht, auf die durch den vom beweglichen Plattenträger (1) durchlaufenen Weg bedingten Belastungen der Gelenkarme (13, 14, 15) zu reagieren, während die zweite Stufe (21) mit Dreh-Drucktöpfen bzw. =Motoren (34, 38) zur Winkel= und Azimutalausrichtung versehen ist, deren veränderlicher Drehhub schneller ist, um es zu gestatten, die Fortbewegung des anderen beweglichen Körpers, auf den die Kamera (5) ausgerichtet ist, getreu zu verfolgen.

9. Vorrichtung nach einem der Ansprüche 1 bis 8, dadurch gekennzeichnet, dass die erste Stufe (3) auf dem beweglichen Trägerorgan (1) unter Zwischenschaltung einer Aufhängung angebracht ist, deren Steifigkeit derart gewählt ist, dass sie die Schwingungs=Mittelfrequenzen von etwa 1,5 bis 25 Hz der Karosserie des Tragfahrzeugs (1) bei einem normalen Kraftfahrzeug gut filtert.

10. Vorrichtung nach einem der Ansprüche 1 bis 8, dadurch gekennzeichnet, dass die erste Ausrichtstufe (3) auf dem beweglichen Tragorgan (1) in einem Bereich befestigt ist, in dem die Hochfrequenzschwingungen, insbesondere für Kameraaufnahmen besonders lästige Schwingungen von 25 bis 40 Hz, verhältnismässig stark abgeschwächt sind, und zwar unter Zwischenschaltung einer Aufhängung, die fähig ist, die mittleren Schwingungsfrequenzen von 26 bis 40 Hz auszufiltrieren.

11. Vorrichtung nach einem der Ansprüche 1 bis 10, dadurch gekennzeichnet, dass die erste Zwischenplatte (20) einstellbar auf dem Zwischenträger (20) in einer derart gewählten Höhe angeordnet ist, dass der Schwerpunkt der von ihr getragenen Ausrüstung wesentlich mittig zwischen den beiden die Arme (13, 14, 15) mit dem Zwischenträger (22) verbindenden Gelenken (18, 19) liegt.

12. Vorrichtung nach einem der Ansprüche 1 bis 11, dadurch gekennzeichnet, dass der Drehträger (16, 17) vermittels des Drehmotors (8) über einen grossen Winkelbereich, beispielsweise von mehr als 360°, drehbar ist, wobei sein Drehhub durch Anschläge begrenzt ist, die die Zerstörung des Kabels bzw. der Kabel verhüten, welche das Fahrzeug einerseits mit der Kamera und andererseits mit den Drucktöpfen bzw. =Motoren der ersten und letzten Ausrichtstufen verbinden, während die Ausschlagwinkel der Kameratragplatte (30) in bezug auf die erste Zwischenplatte (22) auf kleinere Werte von etwa 60° begrenzt sind, um es zu ermöglichen, von einem ortsfesten, im Betrieb freiliegenden Punkt des beweglichen Körpers aus, wie vom Dach eines Kraftfahrzeugs oder vom Rumpf eines Hubschraubers aus, alle Azimutallagen durch Drehen der ersten Ausrichtstufe (3) abzutasten, während der Raumbedarf des in Ruhestellung befindlichen Trägers verhältnismässig gering ist.

## Claims

1. Device for removed control of the position of a support carried by a mobile body, such as a camera carrying plate mounted on an automotive vehicle, characterized in that it comprises:

— a first orientation stage (3) constituted by two arms or groups of arms (13, 14, 15) hingedly interconnected to form a parallelogram and adapted to move rotatively in a general vertical plane under the action of a parallelogram jack or motor (9) interposed between a fixed point of the parallelogram, such as a hinged connection between one arm and another opposite arm (or group of arms) (13, 14), the two arms (or groups of arms) (13, 14, 15) being hingedly connected, at one of their ends, to a rigid intermediary support (20) which is maintained in a substantially vertical position during the pivoting motion of said parallelogram arms in a vertical plane and, at the other end, to a rotary support (16, 17) adapted to rotate in a generally horizontal plane about a substantially vertical axis of rotation for rotating the arms in this general horizontal plane under the action of a rotation jack or motor (8) taking its bearing on the vehicle;

— a second orientation stage (21) based on a first intermediate plate (22) integral with the rigid intermediate support (20), wherein the support properly speaking, such as the support plate (30) of the camera, is adapted to be oriented in lay and in azimuth by orienting jacks or motors (34, 38);

— means for remotely and individually controlling the direction and the speed of the displacement of each one of said jacks (8, 9, 34, 38) of the first (3) and seond (21) orientation stages, allowing in particular the following-up of another mobile body by said camera (5) to be remotely controlled by varying the azimuth and the lay of the plate supporting the camera from said first intermediary plate (22), while ensuring good damping of the vibrations that may be transmitted from the first mobile body to the first intermediary plate (22), and possibly covering a wider area by utilizing the added displacements of said two orientation stages.

2. Device according to claim 1, characterized in that the first intermediary plate 22 integral with said intermediary support (20) carries a first vertical orientation shaft (23) on which a second intermediary plate (26) is mounted so as to be rotatable in a substantially horizontal plane, the angular position said second intermediary plate being controlled by an azimuth orientation jack or motor (38), said second intermediary plate (26) carrying a second horizontal orientation shaft (29) integral with said camera supporting plate (30), the rotation of said second shaft (29) in a substantially horizontal plane being controlled by a camera lay orientation jack or motor (34).

3. Device according to claim 1 or 2, characterized in that the two jacks or motors (8, 9) of the first orientation stage (3) are controlled each by a central position stabilization station which transmits to said jacks correction orders adapted to maintain the first intermediary plate (22) in a substantially horizontal position.

4. Device according to any one of claims 1 to 3, characterized in that the two jacks or motors (8, 9) of the first orientation stage (3) are controlled each by a central damping station which transmits to said jacks correction orders adapted to damp the oscillations imparted to said first stage (3) by the displacements of the supporting mobile body (1).

5. Device according to any one of claims 1 to 4, characterized in that the parallelogram jack (9) and/or the rotation jack (8) of the first orientation stage (3) cooperate with at least one organ for damping the displacements which the hinged arms (13, 14, 15) perform under the action of said jacks.

6. Device according to claim 5, characterized in that the damping organ is included in the parallelogram jack (9) and/or in the rotation jack (8).

7. Device to any one of claims 5 or 6, caracterized in that the damping organ cooperating with at least one of said two jacks (8, 9) of the first stage (3) is a damper such as a relaxation damper or an oscillating damper which allows the low oscillation frequencies of about 1 to 1.5 Hz of the first stage (3) to pass, while choking the high frequencies of more than about 25 Hz of a conventional automotive vehicle.

8. Device according to any one of claims 1 to 7, characterized in that the first orientation stage (3) includes jacks (8, 9) conferring on said stage an angular stroke or variable amplitude and comparatively low speed while allowing, however, to react to loads imparted to the hinged arms (13, 14, 15) by the path along which the plate supporting mobile body (1) moves, whereas the second stage is provided with rotation jacks or motors (34, 38) for orientation in lay and azimuth, the variable angular stroke of which is more rapid so as to allow precisely to follow-up the motion of another mobile body at which the camera (5) is aimed.

9. Device according to any one of claims 1 to 8, characterized in that the first orientation stage (3) is affixed onto the supporting mobile body (1) through the intermediary of suspension means the stiffness of which is so selected as to provide good filtering of the mean frequencies of the oscillations of the body of the carrier vehicle (1), which are comprised between about 1.5 and 25 Hz for a conventional automotive vehicle.

10. Device according to any one of claims 1 to 8, characterized in that the first orientation stage (3) is affixed onto the supporting mobile body (1) in an area wherein the high frequency vibrations, especially those having a frequency comprised between 25 and 40 Hz and being particularly detrimental to the "shooting" of a camera (5), are substantially damped, said stage being fixed through the intermediary of suspension means adapted to filter the intermediary vibration frequencies comprised between 25 and 40 Hz.

11. Device according to any one of claims 1 to 10, characterized in that the first intermediary plate (22) is adjustably fixed on the intermediary support (20) at such a level that the centre of gravity of the equipment it carries is located substantially half-way between the two hinges (18, 19) connecting the arms (13, 14, 15) to the intermediary support (22).

12. Device according to any one of claims 1 to 11, characterized in that the rotation support (16, 17) is adapted to be rotatively driven by the rotation motor (8) over a large angle such as an angle of more than 360°, while its rotational stroke is limited by stops preventing the destruction of the cable or cables connecting the vehicle, on the one hand, to the camera and, on the other hand, to the jacks or motors of the first and last orientation stages, while the angular clearances of the camera supporting plate (30) with respect to the first intermediary plate (22) are limited to smaller values of about 60° so as to allow to scan rapidly, from a fixed point of a mobile body as freed during operation, such as the roof of an automobile or the belly of helicopter, all azimuths by rotating the first orientation stage (3), while reducing the space requirements in the rest position of the vehicle.

FIG.1

FIG.1a

FIG. 2

FIG.3

608 669 0

FIG.4

FIG.5

608 660 0